# EUROPEAN PATENT SPECIFICATION

(11) **EP 1 326 910 B1**
(45) Date of publication and mention of the grant of the patent: **20.09.2006**
(21) Application number: 01986567.4
(22) Date of filing: 08.10.2001
(51) Int. Cl.: C08G 18/83, C09D 175/04, C09D 133/00, C08J 5/18, G03C 1/89

(54) **FILMS AND COMPOSITIONS**
FILME UND ZUSAMMENSETZUNGEN
FILMS ET COMPOSITIONS

(30) Priority: 09.10.2000 GB 0024661
(43) Date of publication of application: 16.07.2003
(73) Proprietor: Innovia Films Limited, Wigton Cumbria CA7 9BG (GB)
(72) Inventor: BELL, David, c/o UCB Films PLC, Wigton, Cumbria CA5 3QG (GB)
(74) Representative: Brand, Thomas Louis
(86) International application number: PCT/EP2001/011599
(87) International publication number: WO 2002/031016

(56) References cited:
- EP-A- 0 628 582
- GB-A- 2 164 963
- US-A- 4 278 578
- US-A- 5 187 199
- US-A- 5 643 669

## Description

The present invention relates to coated sheets having improved properties.

Sheets (such as polymeric films) are coated to modify the properties of the surface so the sheet is more suitable for the desired end use. For example sheets used in the graphic arts or label areas require a surface which is receptive to commonly used inks so the sheet can be readily printed. Such printable coatings comprise functional groups to which the inks can readily adhere.

However a print receptive surface of a coated sheet and the surface when printed must also be resistant to environmental insults (abrasion, light, water and/or solvents etc). For example a printed sheet may form part of an outdoor graphic art display. A label film may be printed and applied to an object on a high speed production line where the film is subject to heat and water. Water resistance is especially desirable in a beverage label as bottles can be pasteurised by stream and the bottle may be immersed in water (e.g., ice bucket for wine bottles).

Several factors have to be considered in the choice of a resins for use in a coating. For examples the functionality of the resin dispersion, the final film properties desired, the pot life of the coating material, and effects from and on any subsequent coating additives may be important. The most popular resins (due to their ready availability and cost) are acrylic resin such as, methyl methacrylate and butyl methacrylate. However more resistant label films require other types of material. Polyurethanes are well known in the coatings industry for their toughness and resistance properties, and so have been used as coatings for example for polypropylene films. The main disadvantage to pure urethanes is that they are presently too expensive to be used to produce a pure polyurethane coated polypropylene film. The optimum coating type to achieve a balance of the selected resistance properties and cost comprises a urethane component and an acrylic component.

The properties of a coating can be altered significantly when a cross-linker is added. For example when unformulated, an acrylic polymer (such as that available commercially from Avecia under the trade name XK90) provides a coating with good adhesion to polypropylene and good anchorage for inks and adhesives, but it does not have resistance to water, although when formulated some water resistance can be achieved using a zirconium cross linker in conjunction with an isocyanate primer.

Isocyanate is used to promote adhesion of the acrylic to the polypropylene which in turn results in a coating which complies with the demands of the ice chest test (as described herein). To improve resistance properties to scratch and boiling water (as in the pasteurisation test described herein) then the acrylic is cross linked by a zirconium cross linker.

It has been believed that adding a stronger cross linker or additional cross-linkers to a film coat would increase the resistance to the point that the film would have no functionality left to accept an ink and indeed would be 'graffiti proof' (i.e. unprintable).

Polyurethane compositions have been used as printable coatings for beverage labels. Such a known film is polypropylene film coated with a printable water resistant coating of a mixture of a urethane polymer and an acrylic polymer. The coating is applied in two steps. First a isocyanate primer layer is coated onto the film to react with functional sites formed on the discharge treated polypropylene. Then the urethane / acrylic top coat is applied and the functionality of the top coat reacts with the primer to form good anchorage of the coating to the film surface. The top coat also contains a zirconium cross-linker to improve water resistance and an unsaturated UV monomer to aid adhesion of UV ink to the film (e.g. as described in EP 0876259) i.e. improve printability..

However one major deficiency of the prior art polyurethane / acrylic film coatings is their performance with respect to abrasion, solvent and alcohol resistance is still not satisfactory. For example when solvents such as alcohol solutions greater than 50% or acetone solutions are applied to such coatings they can be easily removed. Thus these labels are not suitable for certain applications such as labels for liqueurs, spirits bottles or solvent drums.

US 4301053 (GEC) describes a two package polyurethane coating composition comprising aziridine cross-linkers. It is a stated objective that such compositions must be aqueous, fairly polar and capable of being cured at room temperature. This reference also requires as an essential feature of such compositions a small amount of the solvent N-methylpyrrolidone (NMP) to provide adhesion to non-polar plastic substrates. This teaches away from use of aziridine cross-linkers in coatings where it is undesirable to use NMP or where the coating is substantially free of NMP.

US 5532058 and US 5494058 (both Fuller) relates to polyurethane compositions as adhesives for producing laminated films and methods of producing such compositions. Such compositions are not formulated as coatings and their properties (e.g. adhesion) teach away from coating films with such compositions.

US 5807919 describes cross-linked sulphonated polyurethane polymer compositions for coating applications but these teach away from use of unsulphonated polyurethanes.

US 4278578 provides a coating composition for plastic flooring which comprises water having about 1-25% carboxy functional urethane polymer, about 1-25% carboxy functional acrylic copolymer, and about 1-10% aqueous alkali soluble resin dispersed therein. This composition is cross-linked by about 0.2-3% of a polyfunctional aziridine which may be added immediately before use, or prior thereto.

US 5187199 provides a clear coating composition for preventing damage caused by acid rain to automobiles, buildings and outdoor constructions which includes (a) an acrylic resin having a number-average molecular weight of 2500-10000 and a hydroxyl number of 70-120, and containing 20-40 parts by weight of styrene and/or its derivative, based on 100 parts by weight of acrylic resin-constituting monomers (solid basis); (b) a polyester resin having a number-average molecular weight of 350-1500 and a hydroxyl number of 150-300; (c) a mixture of (i) an alkyl ether-substituted melamine resin containing 5 or more alkyl ether groups per each triazine ring; and (ii) a melamine resin containing 1.1-3 imino groups per each triazine ring, a weight ratio of the component (i) to the component (ii) being 8/2-5/5; (d) an acid catalyst blocked with an amine having a boiling point of 150°C-280°C; and (e) a blocked isocyanate, weight ratios of the components being (a)/(b)=100/0-60/40; and (c)/(e)=100/0-33/67.

Thus current printable coated films are not completely satisfactory for all applications and it would be desirable to provide coatings with improved performance in some or all of the areas mentioned herein.

The applicant has surprisingly found that addition of two or more cross-linkers to a coating composition improves coat resistance yet retains other desirable properties such as good printability.

Therefore broadly in accordance with the invention there is provided a coated sheet in which the coating composition comprising a urethane polymer component and an acrylic polymer component and further comprises a plurality of cross-linkers, wherein the sheet comprises a film of polyolefinic polymer. It is preferred that at least one of these cross-linkers is an oxirane, isocyanate, arizidine or carbodiimide.

Preferably.the sheets of the invention are printable although unprintable sheets can be useful for example to make in graffiti proof labels or displays.

Optionally the coated film of the invention does not require prior application of a primer.

The urethane and acrylic polymer components may be mixtures, physical blends, hybrids and/or copolymers thereof.

Conveniently the urethane polymer component is present in an amount of at least about 10% by dry weight of the total coating.

Conveniently the acrylic polymer component is present in an amount of at least about 10% by dry weight of the total coating.

Preferred coated films of the invention exhibits improved properties such as at least one of resistance (more preferably substantial resistance) to solvent (acetone), alcohol, water, heat and/or abrasion as well as good printablility.

Resistance can be measured by the standard methods described herein or well known analogous methods.

Preferably the film is substantially resistant to at least one solvent selected from acetone, alcohol (more preferably propanol and/or aqueous alcohol mixtures conveniently above 50% alcohol by volume), ethyl acetate and tetrahydrofuran (THF).

### Cross-linkers

The compositions of the invention may be crosslinked by adding the at least two crosslinkers to the dispersion at, or shortly before, the time it is applied to a substrate and dried. The cross-linkers may be added sequentially or at the same time. Preferably two or three cross-linkers are used, more preferably two. Previously it had been thought that using more that one cross-linker in a polymeric coat (although it may improve resistance) it would have undesirable effects on other the properties final film such as plasticising the film or making the film unprintable.

Crosslinking may be accomplished with conventional dispersable polyisocyanate crosslinkers. Optimal cross-linking performance requires a relatively high level of terminal primary or secondary amine groups in the polyurethane compositions of the invention and generally, the more amine used, the more likely it is that the pot-life of the composition will be reduced after addition of the cross-linker. Therefore, preferred cross-linkers are those reactive at room temperature, such as polyfunctional aziridine compounds, isocyanates, zinc ammonium carbonate, zirconium carbonate, polyfunctional carbodiimide compounds and/or oxirane (preferably epoxy) compounds..

However it has been found that arizidine and carbodimide cross-linkers are particularly effective so it is preferred that at least one the cross-linkers is either of these types.

More preferably the cross-linkers comprise an oxirane (for example an epoxy) most preferably with an arizidine and/or an isocyanate.

Arizidine are trifunctional amine compounds which may be derived from ethyleneimine. Effective arizidines may be represented by Formula 1: 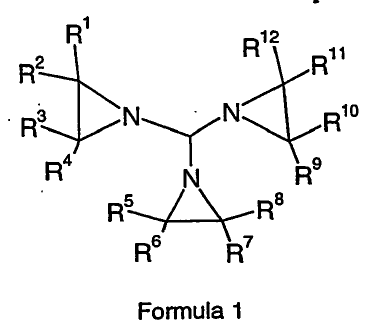 where R¹ to R¹² indepdendently represent any effective optionally substituted organo group.

Preferred aziridines are pentaerythritol-tris-β-(n-aziridinyl)propionate; the poly functional aziridines available commercially under the trade designations XAMA-7 or XAMA-2; the aziridine available commercially from UCB Chemicals under the trade designation M2; and/or the aziridine commercially available from Avecia under the trade designation CX100.

The term "oxirane" is understood to mean a compound or polymer comprising at least one 3 or 4 member cycloalkyl ether ring , that is to say at an epoxy or an oxetanyl radical or compound.

The term "epoxy" is understood to mean a compound or radical of general formula: 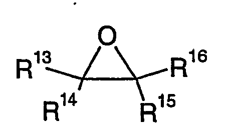 where R¹³ to R¹⁶ independently represent any effective optionally substituted organo group.

The term "oxetanyl" is understood to mean a compound or radical of general formula: 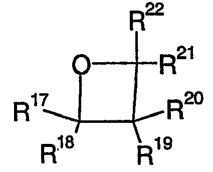 where R¹⁷ to R²² independently represent any effective optionally substituted organo group.

Preferred epoxy functional polymers are epoxy - modified bisphenol A / epichlorohidrin epoxy resins, for example those resins have the following properties: 65% solids; epoxy group content (solid resin) mmol/kg 4650-5130, epoxy molar mass (g of solid resin containing 1 g equivalent of epoxy) 195-215g.

A variety of optional cross-linking materials have been tested, including melamines, silanes, aziridines and single component isocyanates. From the Examples (see Table 1) the applicant has found that the preferred cross-linkers are carbodiimides and arizidine.

In the case of a formulation produced with carbodiimide the applicant has surprisingly and advantageously found there is no need for any primer at all. The carbodiimide is believed to act as a primer as well as a cross linker and an adhesion promoter. Analysis indicates that the carbodiimide may migrate towards the interface between the polypropylene and the acrylic and promotes adhesion between the two.

A useful combination of cross-linkers is an arizidine and a carbodiimide.

To optimise improvements in coatings it is useful to consider the functional nature of the resin e.g. carboxy, hydroxy groups etc and to tailor the cross-linking to this. When formulating cross linked coatings, several parameters have to be considered and optimised. The number of functional groups left after the coating is fully reacted may effect the printability of the coating. Without wishing to be bound by any mechanism, it is believed that with a low level of cross linking the coating can be very ink receptive, however if the cross linker addition levels are too high a unprintable (graffiti proof) coating is manufactured. Similarly by increasing the coalescence of the film i.e. crosslinking, the gloss and haze can be improved. Therefore the balance of additives of the final formulation should be optimised for the desired use. Preferred films are printable films.

To further improve the properties obtained by using acrylic dispersions, then urethanes or urethane acrylics are used as they are known for their excellent abrasion properties. Addition of cross linkers may promote adhesion (such as isocyanate which has been proven to improve adhesion of coatings to polypropylene). Certain cross-linkers may also have the advantage of being reactive with the functional groups in both acrylates and urethanes as well as the corona discharge treated surface of the polypropylene. However, despite producing a more resistant coating in terms of abrasion that does meet the water resistant requirements, coatings comprising cross-linked polyurethanes and acrylic polymers have previously been thought not provide a film with sufficiently improved solvent and alcohol resistance unless a very high addition level of cross-linker is used which would make the film unprintable, too expensive or would have other disadvantageous properties due to present of an excess of reactive cross-linker molecules.

Without wishing to be bound by any mechanism, it is believed that the effectiveness of the isocyanate cross linking can be explained as follows. As the polypropylene surface is corona discharge treated, then the surface functionality is improved. The reactivity of the isocyanate lends itself to reaction with several different types of functional group, including hydroxy, which is the main group found on the polypropylene film surface. So the isocyanate may react with these groups on the substrate surface, but also with the hydroxy and carboxy functionality found within the polymer in the dispersion. Pot life is also a criteria when applying such a coating and this can be improved by the use of blocked isocyanates. However if blocked isocyanates are used then drying temperatures and conditions may become more important.

The reactions of the functional groups will be :
Isocyanate reaction with hydroxyl functional group

   R-OH + R-N=C=O → R-NH-C(=O)-O-R
Isocyanate reaction with carboxyl functional group

   R-C(=O)-OH + R-N=C=O → R-NH-C(=O)-O-R
There will also be a secondary reaction of the isocyanate with water which will result in a small amount of urea being formed in the solution.

Such polyurethane formulations can be shown to pass on the ice chest (see Examples).. However to improve the solvent and alcohol resistance and maintain good adhesion then a combination of two or more different cross-linkers have to be utilised. For example isocyanate and aziridine can be used to produce an effective coating which is highly abrasion resistant, meets the requirements of the 'water tests' and possesses a good level of solvent and alcohol resistance. To prevent the aziridine and the isocyanate from reacting with each other then an aziridine is used which begins cross-linking at room temperature. The isocyanate is blocked so that it only reacts once triggered by temperatures reached during the drying process - for example when the film temperature reaches 90°C. The aziridine improves resistance to solvents such as acetone and alcohol by cross linking thus improving the film formation characteristics. This also has the effect of reducing the available reactive functionality of the binder. The isocyanate improves the adhesion to allow the coating to be a primerless system whilst also offering the benefits of further cross-linking. By reducing the functional hydroxy and carboxy reactive sites the coating becomes far more resistant to attack from aggressive solutions such as IPA.

Typical examples of these cross-linkers are aziridines (such as that available commercially from UCB under the trade name Ucecryl M2) and water based isocyanate (such as that available commercially from UCB under the trade name Ucecryl XE410) and isocyanate (such as that available commercially from Bayer under the trade name Bayhydur 3100). The improvement in performance is outlined below.

Alternative cross-linkers can be used in combination with each other. Successful formulations can also be produced using a carbodiimide (such as that available commercially from Union Carbide under the trade name Ucarlink XL29SE) with the aziridine Ucecryl M2. Another effective composition comprises the isocyanate Bayhydur 3100 with a melamine formaldehyde (such as that available commercially from Dyno Cytec under the trade name Cymel 373).

Depending on the desired properties required total amount of all cross-linkers is preferably present in an amount by dry weight of the total formulation of from about 1 % to about 30%; more preferably from about 2% to about 25%, most preferably from about 2% to about 20%.

Preferably any one cross-linker is present in an amount by dry weight of the total formulation of from about 1% to about 25%; more preferably from about 3% to about 20%; most preferably from about 4% to about 15%; for example about 5%.

Optimisation of formulations is required as an incorrect amount may have a detrimental effect. For example if an excessive amount of cross-linker is added the subsequent residual unreacted material may act like a plasticiser leading to a reduction in the resistance properties of the coating - as well as affecting the overall printability of the material.

There are available a range of urethane acrylic copolymer dispersions that already possess an internal cross-linking mechanism. Examples are Ucecoat DW 5681 and Ucecoat DW 5150 available from UCB Chemicals of Brussels. The most effective system for cross-linking these compositions is by the use of aziridine and isocyanate as previously specified. The generic effect that aziridines have was verified by using a different arizidine (such as that available commercially from Avecia under the trade designation CX100).

The positive effect the aziridine has on the film forming characteristics of the coating can be noted by the increase in the gloss results and the decrease in the haze results. Addition of co-solvent (such as 95% N-methyl-2-pyrrolidone) can aid the film formation of the coating and yet this can also be improved further by the controlled addition of aziridine. It is believed that coalescence may effect both the aesthetic and resistance properties of the film. Thus it is desirable to optimise the cross-linking for each composition.

The choice of urethane within a hybrid is as important. Attention has to be paid to the hardness of the material. If the urethane is 'soft' then as a consequence blocking may become an issue. By choosing medium to hard grades of urethanes then formulating with anti block silica's can be avoided which can also preserve the aesthetics of the film.

### Coating resins

Preferably the urethane polymer component present in an amount from about 10% to about 90%, more preferably from about 20% to about 70%, most preferably from about 30% to about 60%, by dry weight of the total coating.

Preferably the acrylic polymer component is present in an amount from about 10% to about 90%, more preferably from about 20% to about 70%, most preferably from about 30% to about 60%, by dry weight of the total coating.

The Examples herein show coatings with different ratios of urethane to acrylic resins in a physical blends ranging from pure acrylic to pure urethane as comparisons. Acrylic / urethane blends in respective weight ratios of 25/75, 50/50 and 75/25 especially 50/50 can be seen as useful coatings of the invention.

### Polyurethane component

It will be appreciated that the term polyurethane as used herein comprises urethane homopolymers, mixtures of polyurethanes with other polymers (polyurethane blends) and/or copolymers comprising an urethane (carbamate) repeat unit and one or more other repeat unit(s) such as acrylate(s). Polyurethanes as used herein may denote those comprising free or blocked isocyanate groups. Blocked isocyanate groups on those reacted with suitable known blocking agents such that (e.g. after heating) the blocked isocyanate dissociates to generate free isocyanate groups e.g. available to react with suitable acid or polyol groups to form a polyurethane polymer chain or.network.

All of the above resins can offer the desired properties, but when used in 'straight' unformulated form, they will not have the desired adhesion properties to polypropylene and the resistance properties. Several urethanes do have good adhesion properties, but because of the high level of functionality or the softness of the urethane, they do not provide the resistance properties required and vice versa. This also applies to acrylic urethane blends and hybrids, although there are additional complications with these materials, such as the presence of stabilising surfactants which result in the coatings being prone to blanching. Once the properties are optimised with two or more cross linkers then coated films especially suited for use as labels can be produced.

Preferred coating compositions are therefore substantially free of surfactant. The polyurethane component may optionally be non-sulphonated

Preferred polyurethanes used in the films and compositions of the present invention may be those obtained and/or obtainable by a polymerisation reaction comprising an isocyanate itself comprising a free (reactive) NCO group content of from about 10% to about 30%; more preferably from about 15% to about 25%; most preferably from about 16% to about 22%; for example about 18%.

Specific polyurethane components that may be used in the present invention comprise very hard urethane such as that available commercially from UCB Chemicals under the trade designation DW 4860.

The polyurethane polymers of the present invention may be formed using monoisocyanates and polyisocyanates. The isocyanates may be linear aliphatic, cyclic aliphatic, aromatic and mixtures thereof. Examples of commercially available polyisocyanates include Vestanat.RTM. IPDI which is isophorone diisocyanate from HULS America Inc. (Piscataway, N.J.), TMXDT.RTM. which is tetramethylxylene diisocyanate from Cyanamid (Wayne, N.J.), Luxate.RTM. HM which is hexamethylene diisocyanate from Olin Corporation (Stamford, Conn.), diphenylmethane diisocyanate from Upjohn Polymer Chemicals (Kalamazoo, Mich.), Desmodur.RTM. W which is dicyclohexylmethane-4,4'-diisocyanate from Bayer Corporation (Pittsburgh, Pa.) and toluene diisocyanate (TDI). The preferred isocyanates are hexamethylene diisocyanate (HDI), isophorone diisocyanate (IPDI), and mixtures thereof, more preferably HDI trimer..

If desired, small quantities of polyisocyanates which have an isocyanate content greater than 2.1 may be used. Additionally, modified polyisocyanates which are prepared from hexamethylene diisocyanate, isophorone diisocyanate and toluene diisocyanate may also be used. Said polyisocyanates can have functionalities including urethanes, uretdiones, isocyanurates, biurets and mixtures thereof.

Optionally, the polyurethane may be produced by reaction with polymeric diols and/or polyester polyols. Such polyols may have hydroxyl numbers in a range from about 20 to about 140, and preferably from about 40 to about 110. Suitable polymeric polyols may include polyester polyols, polyether polyols, polycarbonate polyols, polyurethane polyols, polyacetal polyols, polyacrylate polyols, polycaprolactone polyols, polyesteramide polyols, polythioether polyols, and mixtures thereof.

Alkylene diols may also be used in the preparation of the polyurethanes. The alkylene diols may have hydroxyl numbers in a range from about 130 to about 1250, and preferably from about 950 to about 1250. The preferred alkylene diols include 1,4-butanediol, 1,6-hexanediol and 2-methyl-1,3-propanediol and may be present in the polyurethane in a range from about 0.1% by weight to about 10.0% by weight, and preferably from about 0.5% by weight to about 5.0% by weight, based on 100 part total polymer solids.

Higher functional polyols may be used in the preparation of the polyurethane-urea polymers. Suitable examples include glycerol, trimethylolpropane, 1,2,4-butane triol, 1,2,6-hexane triol and mixtures thereof. The preferred higher functional polyol is trimethylolpropane. Said polyols may be present in a range from about 0.1% by weight to about 1.0% by weight, and preferably from about 0.3% by weight to about 0.7% by weight, based on 100 parts total polyurethane solids.

Optionally, dihydroxy carboxylic acids may be used when preparing the polyurethane prepolymer. A preferred dihydroxy carboxylic acid is dimethylolpropionic acid. The dihydroxy carboxylic acid component may be present in a range from about 0.05% by weight to about 1.0% by weight, and preferably from about 0.2% by weight to about 0.5% by weight, based on 100 parts total polyurethane solids.

Neutralization of said dihydroxy carboxylic acid groups can be accomplished with compounds such as alkali metal hydroxides, organic tertiary amines, ammonia and mixtures thereof. Preferred neutralizing agents are sodium hydroxide and triethylamine.

### Acrylic component

Throughout this specification, the term acrylic resin is known in the art. Examples of acrylic resins are those polymers with one or more "unsaturated ester moiety" for example comprising an organo species comprising one or more "hydrocarbylidenylcarbonyloxy" functional groups, analogous and/or derived moieties for example moieties comprising (meth)acrylate functionalities and/or derivatives thereof. "Unsaturated ester moieties" may comprise optionally substituted generic α,β-unsaturated acids, esters and/or other derivatives thereof.

Preferred unsaturated ester moieties are those represented by Formula 1. 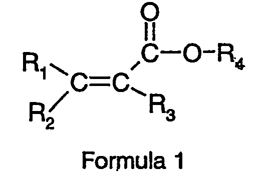 where R₁, R₂, R₃ and R₄ each independently represent H, optionally substituents and/or optionally substituted organo groups; and all suitable isomers thereof, combinations thereof on the same species and/or mixtures thereof.

More preferred moieties of Formula 1 (including isomers and mixtures thereof) are those when R₁, R₂, R₃ and R₄ are independently selected from: H, optional substituents and optionally substituted C₁₋₁₀hydrocarbyl, most preferably H, hydroxy, amino and C₁₋₆hydrocarbyl, for example H, OH and C₁₋₄alkyl.

When R₁ and R₂ is H and R₃ is H, Formula 1 represents an acrylate moiety, which includes acrylate esters and derivatives thereof. When R₁ and R₂ is H and R₃ is methyl Formula 1 represents a methacrylate moiety which includes methacrylate esters and derivatives thereof. Acrylate and/or methacrylate moieties of Formula 1 are particularly preferred.

Conveniently moieties of Formula 1 are those where R₁ and R₂ are independently H, methyl or OH, and R₃ is H or CH₃.

More conveniently moieties of Formula 1 are those where R₁ is OH, R₂ is CH₃, and R₃ is H, and/or tautomer(s) thereof (for example of an acetoacetoxy functional species).

Most convenient unsaturated ester moieties are selected from: -OCO-CH=CH₂; -OCO-C(CH₃)=GH₂; acetoacetoxy, -OCOCH=C(CH₃)(OH) and all suitable tautomer(s) thereof.

It will be appreciated that any suitable moieties represented by Formula 1 could be used in the context of this invention such as other reactive moieties.

Specific acrylic components that may be used in the present invention comprise polymers with acetoacetoxyethyl functional groups such as that available under the trade designation WB1274.

Polyurethane and acrylic hybrids which can be used as both the urethane and acrylic components of the coating of the present invention include:
those copolymers described in WO 92/14768 which are prepared by a free radical polymerisation between a polyurethane and (meth)acrylic monomers, in particular the examples therein especially Example 2;
the urethane acrylics available commercially from Air Products under the trade designation Hybridur 570;
the aliphatic polyurethane - acrylic dispersion which is anionic in nature with a pH of 8.0 and available commercially from Industrial Copolymers Ltd under the trade designation Incobound 004.

Other optional components that may be added to coatings of the present invention which may aid printability of the film comprise:
monomers (which may or may not be UV reactive) to add functionality to promote ink adhesion, optionally in an amount up to about 6% by weight of the formulation; and/or inorganic mineral particulates (such as colloidial silica for example that available commercially from Grace Davison under the trade designation Ludox PX-30) to open up the structure of the cross-linked coat to provide better adhesive anchorage of subsequently applied inks optionally in an amount up to about 6% by weight of the formulation.

The terms 'optional substituent' and/or 'optionally substituted' as used herein (unless followed by a list of other substituents) signifies the one or more of following groups (or substitution by these groups): carboxy, sulpho, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl and/or methoxy.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen and/or sulphur, more preferably from hydrogen, nitrogen, oxygen and/or sulphur.

The term 'hydrocarbo group' as used herein is a sub-set of a organic group and denotes any univalent or multivalent moiety (optionally attached to one or more other moieties) which consists of one or more hydrogen atoms and one or more carbon atoms. Hydrocarbo groups may comprise one or more of the following groups. Hydrocarbyl groups comprise univalent groups formed by removing a hydrogen atom from a hydrocarbon. Hydrocarbylene groups comprise divalent groups formed by removing two hydrogen atoms from a hydrocarbon the free valencies of which are not engaged in a double bond. Hydrocarbylidene groups comprise divalent groups (represented by "R₂C=") formed by removing two hydrogen atoms from the same carbon atom of a hydrocarbon, the free valencies of which are engaged in a double bond; Hydrocarbylidyne groups comprise trivalent groups (represented by "RC≡"), formed by removing three hydrogen atoms from the same carbon atom of a hydrocarbon the free valencies of which are engaged in a triple bond. Hydrocarbo groups may also comprise any saturated, unsaturated double and/or triple bonds (e.g. alkenyl, and/or alkynyl respectively) and/or aromatic groups (e.g. aryl) and where indicated may be substituted with other functional groups.

Most preferably organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group):

The term 'alkyl' or its equivalent (e.g. 'alk') as used herein may be readily replaced, where appropriate and unless the context clearly indicates otherwise, by terms encompassing any other hydrocarbo group such as those described herein.

Any substituent, group or moiety mentioned herein refers to a monovalent species unless otherwise stated or the context clearly indicates otherwise (e.g. an alkylene moiety may comprise a bivalent group linked two other moieties). A group which comprises a chain of three or more atoms signifies a group in which the chain wholly or in part may be linear, branched and/or form a ring (including spiro and/or fused rings). The total number of certain atoms is specified for certain substituents for example C₁₋ₘorgano, signifies an organic group having from 1 to m carbon atoms. In any of the formulae herein if one or more ring substituents are not indicated as attached to any particular atom on the ring, the substituent may replace any hydrogen atom attached to a ring atom and may be located at any available position on the ring which is chemically suitable.

Preferably any of organic groups listed above comprise from 1 to 36 carbon atoms, more preferably from 1 to 18. It is particularly preferred that the number of carbon atoms in an organic group is from 1 to 10 inclusive.

Unless the context clearly indicates otherwise, as used herein plural forms of the terms herein are to be construed as including the singular form and vice versa.

The term 'effective' (for example with reference to the process, uses, products, materials, compounds, monomers, oligomers, polymer precursors and/or polymers of the present invention) will be understood to refer to those ingredients which if used in the correct manner provide the required properties to the material, compound, composition, monomer, oligomer, polymer precursor and/or polymer to which they are added and/or incorporated in any one or more of the uses and/or applications described herein. As used herein the term "suitable" denotes that a functional group is compatible with producing an effective product.

The substituents on the repeating unit may be selected to improve the compatibility of the materials with the polymers and/or resins in which they may be formulated and/or incorporated to form a flame retardant material. Thus, the size and length of the substituents may be selected to optimise the physical entanglement or interlocation with the resin or they may or may not comprise other reactive entities capable of chemically reacting and/or cross-linking with such other resins.

Certain moieties, species, groups, repeat units, compounds, oligomers, polymers, materials, mixtures, compositions and/or formulations which comprise some or all of the invention as described herein may exist as one or more stereoisomers (such as enantiomers, diastereoisomers, geometric isomers, tautomers and/or conformers), salts, zwitterions, complexes (such as chelates, clathrates, crown compounds, cyptands / cryptades, inclusion compounds, intercalation compounds, interstitial compounds, ligand complexes, non-stoichiometric complexes, organometallic complexes, π-adducts, solvates and/or hydrates); isotopically substituted forms, polymeric configurations [such as homo or copolymers, random, graft or block polymers, linear or branched polymers (e.g. star and/or side branched polymers), hyperbranched polymers and/or dendritic macromolecules (such as those of the type described in WO 93/17060), cross-linked and/or networked polymers, polymers obtainable from di and/or tri-valent repeat units, dendrimers, polymers of different tacticity (e.g. isotactic, syndiotactic or atactic polymers)]; polymorphs [such as interstitial forms, crystalline forms, amorphous forms, phases and/or solid solutions] combinations thereof where possible and/or mixtures thereof. The present invention comprises all such forms which are effective.

It is appreciated that certain features of the invention, which are for clarity described in the context of separate embodiments may also be provided in combination in a single embodiment. Conversely various features of the invention, which are for brevity, described in the context of a single embodiment, may also be provided separately or in any suitable sub-combination.

The term "comprising" as used herein will be understood to mean that the list following is non-exhaustive and may or may not include any other additional suitable items, for example one or more further feature(s), component(s), ingredient(s) and/or substituent(s) as appropriate.

### Substrate sheets

The film used in the present invention, prior to deposition of any coating or layer is a polyolefinic polymer film such as polybutylene, polypropylene and/or polyethylene.

Conveniently the polyolefin films to be used with the present invention may comprise one or more polyolefins [e.g. polybutylene homopolymer, polypropylene homopolymer, polyethylene homopolymer (e.g. linear low-density polyethylene - LLDPE), and/or copolymer or terpolymer combinations of butylene, propylene and/or ethylene monomer(s); optionally in one or more layers]. Preferred polymers may be random and/or block polymers. The constituent polymers and/or layers in a film of the present invention may be oriented, blown, shrunk, stretched, cast, extruded, co-extruded and/or comprise any suitable mixtures and/or combinations thereof. Preferred films comprise a major proportion of polypropylene and/or an olefin block and/or random copolymer containing up to about 15% (more preferably 10%) w/w of the copolymer of at least one copolymerisable olefin (such as ethylene) and/or polyester. More preferred films comprise polypropylene homopolymer, most preferably isotactic polypropylene homopolymer. Films may optionally be crosslinked by any suitable means such as electron beam (EB) or UV crosslinking, if necessary by use of suitable additives in the film.

The definition of polyolefin, as intended herein, is a polymer assembled from a significant percentage, preferably ≥50% by weight of one or more olefinic monomers. The definition of copolymer herein, is a polymer assembled from two or more monomers. Such polymers may include, but are not limited to, polyethylene homopolymers, ethylene-α-olefin copolymers, polypropylene-α-olefin copolymers, polypropylene homopolymers, polybutylene homopolymers, polybutylene-α-olefin copolymers, butylene-propylene copolymers, butylene--ethylene copolymers, propylene-ethylene copolymers, butylene-propylene-ethylene terpolymers, ethylene-vinyl acetate copolymers, ethylene-methacrylic acid copolymers and their salts, ethylene-styrene polymers and/or blends of such polymers. The polymers may be produced by any suitable means, for example one or more of free radical polymerisation (e.g. peroxy compounds), metallocoene catalysis, coordination catalysis (e.g., Ziegler or Natta catalysts and/or variations thereof).

Polymeric resins used to produce the films of the present invention are generally commercially available in pellet form and may be melt blended or mechanically mixed by well-known methods known in the art, using commercially available equipment including tumblers, mixers and/or blenders. The resins may have other additional resins blended therewith along with well-known additives such as processing aids and/or colorants. For examples hydrocarbon resins may be added to improved the stiffness and/or barrier properties of the resultant films. Methods for producing polyolefin films are well-known and include the techniques of casting films as thin films through narrow slit dies, and blown-film techniques wherein an extruded tube of molten polymer is inflated to the desired bubble diameter and/or film thickness.

For example to produce a polymeric film the resins and additives are introduced into an extruder where the resins are melt plastified by heating and then transferred to an extrusion die for formation into a film tube. Extrusion and die temperatures will generally depend upon the particular resin being processed and suitable temperature ranges are generally known in the art or provided in technical bulletins made available by resin manufacturers. Processing temperatures may vary depending upon process parameters chosen.

A film of the present invention may be oriented by stretching at a temperature above the glass transition temperature (T_{g}) of its constituent polymer(s). The resultant oriented film may exhibit greatly improved tensile and stiffness properties. Conveniently a film comprising a propylene homopolymer is oriented at a temperature within a range of from about 145° to 165°C. Orientation may be along one axis if the film is stretched in only one direction, or may be biaxial if the film is stretched in each of two mutually perpendicular directions in the plane of the film. A biaxial oriented film may be balanced or unbalanced, where an unbalanced film has a higher degree of orientation in a preferred direction, usually the transverse direction. Conventionally the longitudinal direction (LD) is the direction in which the film passes through the machine (also known as the machine direction or MD) and the transverse direction (TD) is perpendicular to MD. Preferred films are oriented in both MD and TD.

Orientation of the film may be achieved by any suitable technique. For example in the bubble process the polypropylene film is extruded in the form of a composite tube which is subsequently quenched, reheated, and then expanded by internal gas pressure to oriented in the TD, and withdrawn, at a rate greater than that at which it is extruded, to stretch and orient it in the MD. Alternatively a flat film may be oriented by simultaneous or sequential stretching in each of two mutually perpendicular directions by means of a stenter, or by a combination of draw rolls and a stenter. A preferred oriented film comprises biaxially oriented polypropylene (known herein as BOPP), more preferably the BOPP film described in EP 0202812.

The degree to which the film substrate is stretched depends to some extent on the ultimate use for which the film is intended, but for a polypropylene film satisfactory tensile and other properties are generally developed when the film is stretched to between three and ten, preferably, seven, times its original dimensions in each of TD and MD.

After stretching, the polymeric film substrate is normally heat-set, while restrained against shrinkage or even maintained at constant dimensions, at a temperature above the T_{g} of the polymer and below its melting point. The optimum heat-setting temperature can readily be established by simple experimentation. Conveniently a polypropylene film is heat-set at temperatures in the range from about 100° C to about 160° C. Heat-setting may be effected by conventional techniques for example by means one or more of the following: a stenter system; one or more heated rollers (e.g. as described in GB 1124886) and/or a constrained heat treatment (e.g. as described in EP 023776).

The film may comprise a major proportion of polypropylene such as isotactic polypropylene homopolymer, but also may comprise coextruded multilayer films where the polymer of at least one layer is isotactic polypropylene homopolymer, and the polymer of one or both outer layers is a surface layer polymer having different properties to the isotactic polypropylene homopolymer.

The film of the present invention may consist of only one layer, or may be multi-layered i.e. comprise a plurality of layers. The layers can be combined by lamination or co-extrusion. More preferably the film comprises at least three layers where at least one layer(s) are sandwiched between other layers such that none of such sandwiched layer(s) form either surface of the film.

Thus for example a film of the invention may comprise a three layer film where the polymer of a central or core layer comprises one polymeric material. The core layer may have a thickness of about 90 to about 98% of the total thickness of the film. The remainder of such a three layer film may comprise two outer layers of another polymeric material, with each outer layer having substantially identical thickness.

Another film of the present invention may comprise a coextruded five layer film comprising a central core layer, two layers contiguous to the central core layer and two outermost layers, where the central core layer and such contiguous layers comprise one polymeric material and the two outer layers comprise another polymeric material.

Preferably the central core layer has a thickness from about 70% to about 96%, more preferably from about 76% to about 90%, of the total thickness of the film. Preferably each of such contiguous layers has substantially the same thickness, which is more preferably from about 1 % to about 6%, most preferably from about 1 % to about 2%, of the total thickness of the film. Preferably each outer layer has substantially the same thickness, which is more preferably from about 1% to about 6%, most preferably from about 1% to about 2%, of the total thickness of the film.

A film of the invention may also be made by lamination of two coextruded films.

One or more layers of the films of the present invention may be opaque or transparent depending on the end use of the film. Such layers may also comprise voids introduced by stretch orienting such a layer containing (optionally spherical) particles of a material higher melting than and immiscible with the layer material (e.g. if the layer comprises isotactic polypropylene homopolymer, then such particles may be, polybutylene terephthalate, as shown, for example, in US 4632869 and US 4720716). Preferably such particles may comprise natural fibre (such as cellulosic fibre, wool pulp, cotton linters, vegetable fibre, hemp and/or sisial), synthetic fibre (such as viscose, polyester, and/or nylon) and/or organic and/or inorganic particles of any shape such as spherical and/or amorphous particles (e.g. calcium carbonate, ground cellulose, cellulose spheres, amorphous polysaccharides, starch, chitin and/or super absorbent polyacrylate powder).

Multiple-layer films of the invention may be prepared in a range of thicknesses governed primarily by the ultimate application for which a particular film is to be employed. For general use films, having a mean thickness from about 2.5 µm to about 150 µm, preferably from about 4 µm to about 100 µm are suitable. For certain applications, such as packaging, more preferred films have a mean thickness of from about 8 µm to 50 µm, most preferably from about 10 µm to about 40 µm.

If desired, before applying a coat of the present invention (or any other prior coating or layer) the sheet may be subjected to a chemical or physical surface-modifying treatment to insure that the coating will better adhere to the film thereby reducing the possibility of the coating peeling or being stripped from the film. Known prior art techniques for surface pre-treatment prior to coating comprise, for example: film chlorination, i.e., exposure of the film to gaseous chlorine; treatment with oxidising agents such as chromic acid, hot air or steam treatment; flame treatment and the like. One such treatment, because of its simplicity and effectiveness, is the so-called electronic treatment in which the film is passed between a pair of spaced electrodes to expose the film surface to a high voltage electrical stress accompanied by corona discharge.

Optionally if an even adhesion of the coating is desired an intermediate continuous coating of primer medium can applied to a film surface treated by any of the methods described herein. Primer materials may comprise titanates and poly(ethylene imine) and may be applied by as conventional solution coatings [such as poly(ethylene imine) applied as either an aqueous or organic solvent solution, e.g. in ethanol comprising about 0.5 wt. % of the imine]. Another primer medium comprises the interpolymerised condensation acrylic resins prepared in the presence of a C₁₋₆alkanol as described in either: GB 1134876 (condensing a monoaldehyde with an interpolymer of acrylamide or methacrylamide with at least one other unsaturated monomer); or in GB 1174328 (condensing a monoaldehyde with acrylamide or methacrylamide, and subsequently interpolymerising the condensation product with at least one other unsaturated monomer). However in a preferred embodiment coated films of the present invention do not require a primer layer.

One or more of the layers and/or coatings comprising the films of the invention may conveniently contain any additives added within the film and/or as part of a coating on to the film conventionally employed in the manufacture of films, and such additives and/or coatings may be added for more than one effect and/or for similar purposes (on either side of the film) and in addition to the coating ingredients mentioned herein such as additives to improve ink adhesion and/or printability and cross-linking agents.

Such additives and/or coatings may be selected from one or more of the following, mixtures thereof and/or combinations thereof: dyes; pigments, colorants; metallised and/or pseudo-metallised coatings; lubricants, anti-oxidants, anti-static agents; surface-active agents, stiffening aids, gloss-improvers, prodegradants, UV attenuating materials (e.g. UV light stabilisers); sealability additives;, tackifiers, anti-blocking agents, jaw release aids, adhesive layer (e.g. a pressure sensitive adhesive); an adhesive release layer (e.g. for use as the backing material in the peel plate method for making labels); and/or a barrier layer and/or ingredients to achieve or improve the impermeablity of the film for example to moisture and/or oxygen (such as vinylidene halide homo or copolymers e.g. PvDC or PvDF which may be in the form of a stabilised dispersion optionally stabilised with anionic or cationic surfactants). It will be appreciated that a plurality of the preceding properties may be achieved by one or more additives and/or coatings which exhibit two or more of these affects.

Further coating ingredients comprise those to reduce coefficient of friction (COF) such as: silica and/or a terpolymer described in US 3753769 which comprises from about 2% to about 15% w/w of acrylic or methacrylic acid, from about 10% to about 80% w/w of methyl or ethyl acrylate, and from about 10% to about 80% w/w of methyl methacrylate, together with colloidal silica and microcrystalline wax such as beeswax, paraffin wax and/or carnauba wax.

Still further additives comprise slip aids such as hot slip aids or cold slip aids which improve the ability of a film to satisfactorily slide across surfaces at about room temperature for example micro-crystalline wax. Preferably the wax is present in the coating in an amount from about 0.5% to about 5.0% w/w, more preferably from about 1.5% to about 2.5% w/w. The wax particles may have an average size conveniently from about 0.1 µm to 0.6 µm, more conveniently from about 0.12 µm to about 0.30 µm.

Yet further additives comprise conventional inert particulate additives, preferably having an average particle size of from about 0.2 µm to about 4.5 µm, more preferably from about 0.7 µm to about 3.0 µm. Decreasing the particle size improves the gloss of the film. The amount of additive, preferably spherical, incorporated into the or each layer is desirably in excess of about 0.05%, preferably from about 0.1% to about 0.5%, for example, about 0.15%, by weight. Suitable inert particulate additives may comprise an inorganic or an organic additive, or a mixture of two or more such additives. Suitable particulate inorganic additives include inorganic fillers such as talc, and particularly metal or metalloid oxides, such as alumina and silica. Solid or hollow, glass or ceramic micro-beads or micro-spheres may also be employed. A suitable organic additive comprises particles, preferably spherical, of an acrylic and/or methacrylic resin comprising a polymer or copolymer of acrylic acid and/or methacrylic acid and/or a C₁₋₆ester thereof. Such spherical particles of resins may be cross-linked, for example by the inclusion therein of a cross-linking agent, such as a methylated melamine-formaldehyde resin. Promotion of cross-linking may be assisted by the provision of appropriate functional groupings, such as hydroxy, carboxy and amido groupings, in the acrylic and/or methacrylic polymer.

Yet still further additives comprise fumed silica for the purpose of further reducing the tack of the coating at room temperature. The fumed silica is composed of particles which are agglomerations of smaller particles and which have an average particle size of, for example, from about 2 µm to about 9 µm, preferably from about 3 µm to about 5 µm, and is present in the coating in an amount, for example, from about 0.1 % to about 2.0 % by weight, preferably about 0.2% to about 0.4% by weight.

It is contemplated that in some instances, the additives used in the present invention should have the additional benefit of aiding or enhancing the properties of other conventional additives used in the film such as those listed herein.

Some or all of the desired additives listed above may be added together as a composition to coat the film of the present invention and/or form a new layer which may itself be coated (i.e. form one of the inner layers of a final multi-layered film) and/or may form the outer or surface layer of the film. Alternatively some or all of the preceding additives may be added separately and/or incorporated directly into the bulk of the film optionally during and/or prior to the film formation (e.g. incorporated as part of the original polymer composition by any suitable means for example compounding, blending and/or injection) and thus may or may not form layers or coatings as such.
Formation of a film of the invention (optionally oriented and optionally heat-set as described herein) which comprises one or more additional layers and/or coatings is conveniently effected by any of the laminating or coating techniques well known to those skilled in the art.

A film of the invention may also be coated with one or more of the additives described herein using conventional coating techniques from a solution or dispersion of the additive in a suitable solvent or dispersant. An aqueous latex, (for example prepared by polymerising polymer precursors of a polymeric additive) in an aqueous emulsion in the presence of an appropriate emulsifying agent is a preferred medium from which a polymeric additive or coating may be applied.

Such coatings may be applied to the second surface of the film (i.e. that surface other than that to which the high resistance printable coating of the invention is applied), to either surface or to both surfaces. The, or each, coating may be applied sequentially, simultaneously and/or subsequently to any or all other coatings.

A coating composition may be applied to the treated surface of film (such as the polymer film) in any suitable manner such as by gravure printing, roll coating, rod coating, dipping and/or spraying. Solvents, diluents and adjuvants may also be used in these processes as desired. The excess liquid (e.g..aqueous solution) can be removed by any suitable means such as squeeze rolls and/or doctor knives. The coating composition will ordinarily be applied in such an amount that there will be deposited following drying, a smooth, evenly distributed layer of suitable thickness. In general, the thickness of the applied coating is such that it is sufficient to impart the desired characteristics to the substrate film. Once applied to the film a coating may be subsequently dried by hot air, radiant heat or by any other suitable means to provide a film of the present invention with the other desired properties (such as a non-water soluble, optionally clear, adherent, glossy coated film useful, for example, in labelling and/or graphic arts applications).

It would also be possible to use more than one of the above methods for one or more of the additives or components thereof described herein for example one or more of the components may be incorporated into the resin prior to making the film and the one or more others may be coated onto the surface

Further aspects of the present invention also comprise:
packaging for an article, the packaging comprising a film of the invention as described herein;
an article packaged with said packaging;
a label and/or graphic art display comprising a film of the invention as described herein; and/or
an article comprising said label and/or said graphic art display.

A further aspect of the present invention is the coating composition used to coat the films described herein and related aspects of such compositions. It is readily apparent that all preferred features, embodiments and/or examples described herein relating to films of the invention apply analogously to all the inventions described herein such as for example to the compositions, agents, uses thereof, and methods for making them described below.

Thus broadly there is provided a composition as described herein effective for applying as a coating to produce a film having the advantageous properties described herein.

Still further aspects of the present invention comprise:
a method of coating a film with a, composition of the invention as described herein;
use of a composition of the invention as described herein for the purpose of coating a film to provide at least one improved property to a film, preferably such propert(ies) being selected from: improved abrasion resistance, improved solvent resistance and improved printability.

Yet still further aspects of the invention and preferred features thereof are given in the claims.

The invention is further illustrated by reference to the following non-limiting Examples. which were tested for various properties. The principle tests used herein are pasteurisation, ice chest, solvent / alcohol resistance and abrasion resistance (which is non quantitative) and these are described below.

### Printing

The samples tested are printed on a 140-mesh plain weave printing screen at a tension of 22 N/cm. The sample is placed on a vacuum hold down bed and a single pass the UV curable orange screen ink available commercially from Norcote under the trade designation Norcote RSP-019 was applied to the sample. The ink is then cured by two passes through a UV laboratory cure unit with a standard Mercury Vapour bulb, set at 300w/inch and a belt speed of 40ft/min. The samples should be aged 16 hours before printing and a further 16 hours after printing before any further tests are carried out on them. Unless otherwise indicated in the example herein the ink used was as described above. Where other inks were used in the tests herein they were applied analogously to the above method or by other well known methods as appropriate.

### Pasteurisation Test

The printed samples are placed in a stirred water bath that is controlled at a temperature of 95°C. The samples are left in the stirred water bath for 30 minutes before being removed. Once removed the samples are tested immediately (in the scratch and/or tape tests described below) to guard against any recovery as they cool.

### Ice Chest

The samples are attached to a glass plate via double-sided Scotch tape and placed into an ice chest. The area between the plates is filled with ice until the labels are covered and the remaining space in the ice chest filled with water. The samples are then left for 24 hours. When the samples are removed they are subjected to the scratch and/or tape test as described below.

### Scratch test / coin test

To test for scratch resistance an USA 5 cent coin is run across the surface on the printed area at an approximate angle of 30° to the surface. The degree of pressure applied to the coin with each scratch is denoted by a letter; L denoting light pressure, M denoting moderate pressure and H denoting hard pressure. The result is quantified by the amount of ink removed. The result scale is from 0 to 4, with 0 meaning that no ink has been removed and 4 meaning that a large amount of ink has been removed. 0 or 1 is acceptable, 2 is regarded as 'borderline', 3 and 4 are failures.

### Tape test

After the printed ink surface has been tested with a coin, a piece of Scotch tape is applied to the sample and pulled off at an angle of 90° rapidly. This will reflect the adhesion of the ink to the coating surface. An ink loss of 10% is acceptable. Any higher results in a failure.

### Solvent / Alcohol Resistance

1 ml of acetone for the solvent resistance test and 1 ml of IPA for the alcohol resistance test is applied to the surface of the coating. The solution is then rubbed round in a circular motion with a Kimberley Clark Kimwipe medical tissue 12 times with a moderate pressure. The surface of the coating is then examined for damage. The results are quantified from 1 to 5 as follows, the higher the rating the better the resistance. Substantial resistance can be considered a rating of 4 or 5.

### Alcohol resistance -ratings

1. Coating removed completely.
2. Coating disrupted and some coating removed.
3. Coating disrupted and some surface redistribution reflected by streak paint type marks.
4. Some signs of disruption indicated by surface spots and blistering.
5. No impact.

### Solvent (Acetone) resistance- ratings

1. Coating removed completely - easily upon contact of acetone and paper wipe.
2. Coating removed with moderate rubbing of acetone and paper wipes.
3. Coating completely or partly removed - constant heavy pressure rubbing and repeated application(s) of acetone.
4. Coating completely or partially removed with extreme difficulty - more than three applications of acetone.
5. Coating could not be removed.

### Cross hatch

Resistance also can be measured by testing the adhesion of the coat after exposure, using the well known cross hatch test and visually classing the result by a rating of 0 to 5 as described in BS 3900-E6, ASTM D3359-B, DIN53 151 or ISO 2409. In this test a lower number is more resistant and substantial resistance can be considered a rating or 0 or 1.

### Gloss and Haze

Gloss is measured using a Pacific Scientific Glossgard 2 45° glossmeter and the haze is wide angle haze as measured by a Diffusion Systems Ltd wide angle hazemeter.

### 'Blanching'

The film is held to the light and visually inspected. The rating scale is from 1 to 10, where 1 is a completely clear film unaffected by the exposure to water and 10 is a completely white film similar in appearance to the polypropylene film available commercially from UCB Films under the trade designation W58.

In the Examples herein the coatings of the present invention were all coated onto a conventional OPP film which was prepared by any suitable well known method such as that described below.

### Preparation of uncoated OPP film

From a triple channel annular die were coextruded a propylene homopolymer and a composition to form a polypropylene. The coated polypropylene tube was cooled by passage over a mandrel within the tube, and externally quenched by passage through a water bath surrounding the mandrel, heated to stretching temperature, expanded by internal gas pressure, and withdrawn from the expansion zone at a rate greater than that at which it was fed thereto, so that the tube was stretched to seven times its original dimensions in both the direction of extrusion and in a direction transverse thereto. The stretched tubular film was then opened out to form flat film which was subsequently heat-set at a temperature of 120° C. on a matt-surfaced roller heat-setter of the kind described in GB-A-1124886. Discharge treatment of the heat-set film was effected by a single aluminium rod electrode extending across the entire width of the film, and connected to a Sherman GT60, 6 kilowatts, solid state corona treater, operating at 2 amps.

### Examples and test results

Prior art coatings were prepared and tested to act as a comparison with the coatings of the present invention and these are denoted by letters. Coatings of the invention are denoted by numbers.

Films with the coatings shown in Table 1 were prepared tested as described herein .The following ingredients were used.
The aziridine available commercially from UCB Chemicals under the trade name Ucecoat M2;
The isocyanate available commercially from UCB Chemicals under the trade name Ucecoat XE410;
The urethane / acrylic hybrid resin available commercially from UCB Chemicals under the trade name Ucecoat DW 5861 which has equal weight of polyurethane and acrylic components.
The colloidial silica available commercially from Grace Davison under the trade designation Ludox PX-30.
The UV curable monomer available commercially from UCB Chemicals under the trade name Ebecryl 40 (added to increase functionality of the coat to improve ink adhesion). If necessary some surfactant may also be added to stabilise the formulation in water.

**Table 1**

| Ingredient | Dry weight / g | | | | |
|---|---|---|---|---|---|
| | A | B | C | D | 1 |
| DW 5861 (urethane / acrylic hybrid) | 92 | 77 | 82 | 72 | 85 |
| XE410 (isocyanate | 5 | 10 | 15 | 25 | 8 |
| Ucecryl M2 (arzidine) | 0 | 0 | 0 | 0 | 4 |
| Ebecryl 40 (monomer) | 3 | 3 | 3 | 3 | 3 |
| Ludox (silica) | 0 | 10 | 0 | 0 | 0 |

**Table 2 (testing after one day aging)**

| Ex | Ice Chest (coin test) | Pasteurisation (coin test) | Resistance | | Blanching |
|---|---|---|---|---|---|
| | | | Solv | IPA | |
| A | 1,1,0H | 2,2;2 H | 1 | 1 | 4 |
| B | 0,0,0H | 0,0,0H | 1 | 3 | 0 |
| C | 0,0,1 H | 0,0,0H | 1 | 2.5 | 1 |
| D | 0,0;0 H | 0,0;0 H | 1 | 3 | 0 |
| 1 | 0,0;0 H | 0,0;0 H | 4 | 4.5 | 0 |

These results show the synergistic benefit of two cross-linkers in Example 1 compared to one crosslinker even in greater amounts. The solvent and alcohol resistance of the coat is improved whilst water resistance in the other tests is maintained.

There are available a range of urethane acrylic copolymer dispersions that already possess an internal cross-linking mechanism such as Ucecoat DW 5681 available from UCB Chemicals. These polymers were used with additional cross-linkers of aziridine and isocyanate. The addition level of either cross linker was between 2% and 25% depending on the desired properties required. The formulations are given in Table 3 below.

**Table 3**

| Ingredient | Dry weight / g | | | | |
|---|---|---|---|---|---|
| | 2 | 3 | 4 | 5 | 6 |
| DW 5861 (urethane / acrylic hybrid) | 82 | 82 | 83 | 84 | 85 |
| XE410 (isocyanate | 10 | 10 | 10 | 10 | 10 |
| Ucecryl M2 (arzidine) | 5 | 5 | 4 | 3 | 2 |
| Ebecryl 40 (monomer) | 3 | 3 | 3 | 3 | 3 |

The coating is used at 20% solids to give a dry coat weight of 1 gramme per metre square. Example 3 is produced exactly the same way as Example 2 but with a NMP free binder. The pasteurisation, ice chest, blanching and resistance data for these doubly cross-linked coatings are set out in Table 4.

**Table 4**

| Ex | Gloss | WAH | Ice - coin | Ice - tape | Past. -coin | Past. - tape | Blanch | Acet. | IPA |
|---|---|---|---|---|---|---|---|---|---|
| 2 | 102.5 | 1.2 | 0H,0H 0H | 0% | 0H,0H 0H | 0% | 1 | 5 | 4.5 |
| 3 | 100.2 | 1.4 | 0H,0H 0H | 0% | 0H,0H 0H | 0% | 1 | 3.5 | 4 |
| 4 | 101.8 | 1.2 | 0H,0H 0H | 0% | 0H,0H ,0H | 0-5% | 1 | 3.5 | 4 |
| 5 | 101.5 | 1.3 | 0H,0H , 0H | 0% | 0H,0H 0H | 0-5% | 1 | 3.5 | 4+ |
| 6 | 100.9 | 1.6 | 0H,0H 0H | 0% | 0H,0H 0H | 0-10% | 1 | 3.5 | 4 |

The positive effect the additional aziridine cross-linker has on the film forming characteristics of the coating can be noted by the increase in the gloss results and the decrease in the haze results.. Testing of Example 2 has indicated that the film does not block, with results of zero obtained.

Various other coated films of the invention were printed and tested as described herein and the results are given in the Tables below.

**Table 5**

| (Tests performed after one week aging of coat). | | | | | |
|---|---|---|---|---|---|
| Example | Resin | Pasteurisation | | Ice chest | |
| | | Coin | Tape | Coin | Tape |
| E | Acrylic only | 2h | 20% | 2h | 10% |
| 7 | 25 / 75 urethane / acrylic blend | 1m | 20% | 1 m | 10% |
| 8 | 50 / 50 urethane / acrylic blend | 1 h | 10% | 1 h | 0% |
| 9 | 50 / 50 urethane / acrylic hybrid | 1h | 0% | 1 h | 10% |
| 10 | 75 / 25 urethane / acrylic blend | 1 h | 10% | 2h | 10% |
| F | Urethane only | 2h | 10% | 1 h | 10% |

**Table 6**

| Ingredient | Weight / g | | | | |
|---|---|---|---|---|---|
| | E | 7 | 8 | 10 | F |
| DW 4860 (urethane) | 0 | 2.7 | 5.4 | 8.0 | 10.7 |
| WB1274 (acrylic) | 10.7 | 8.0 | 5.4 | 2.7 | 0.0 |
| Ucecryl M2 (arzidine) | 0.8 | 0.8 | 0.8 | 0.8 | 0.8 |
| XE410 (isocyanate) | 1.5 | 1.5 | 1.5 | 1.5 | 1.5 |
| Ebecryl 1160 (monomer) | 0.5 | 0.5 | 0.5 | 0.5 | 0.5 |
| PMMA paraloid | 0.2 | 0.2 | 0.2 | 0.2 | 0.2 |
| Ludox (silica) | 1.5 | 1.5 | 1.5 | 1.5 | 1.5 |
| Water | 85 | 85 | 85 | 85 | 85 |

Examples in Table 6 comprise physical mixtures of urethane and acrylic polymer. Example 9 was the same as Example ! except the 50 to 50 mix of DW 4860 and WB 1274 was replaced by the same total weight (10.8 g) of that urethane / acrylic hybrid polymer available from UCB Chemicals under the trade designation DW 5861, where the urethane and acrylic components were also present in equal weight:

**Table 7**

| Example | Resin | Age | Acetone | IPA | Rub |
|---|---|---|---|---|---|
| E | Acrylic only | 13 days | 3 | 3 | 32 |
| 7 | 25 / 75 urethane / acrylic blend | 13 days | 2 | 3 | 34 |
| 8 | 50 / 50 urethane / acrylic blend | 13 days | 2 | 3 | 66 |
| 9 | 50 / 50 urethane / acrylic hybrid | 13 days | 3 | 4 | 175 |
| 10 | 75 / 25 urethane / acrylic blend | 13 days | 2.5 | 3 | 176 |
| F | Urethane only | 13 days | 4 | 5 | 190 |

Table 7 shows that resistance increases with urethane concentration.

The following examples in Table 8 compare the another hybrid resin system using a single (isocyanate) cross-linker (coating F) and with addition of a second aziridine cross-linker (Example 11).

**Table 8**

| Ingredient | F | 11 |
|---|---|---|
| Incobond 004 (hybrid resin) | 34.5 | 30.8 |
| XE410 (isocyanate) | 0.8 | 1.5 |
| Ucecryl M2 (arziridine) | 0 | 0.8 |
| Ebecryl 1160 (monomer) | 0.5 | 0.5 |
| Water | 66.6 | 66.6 |

Incobond 004 is an aliphatic polyurethane - acrylic dispersion designed to give good adhesion to low surface energy substrates. The polymer is known to have carboxyl functional groups present ,has a pH of 8, is anionic in nature and is available commercially from Industrial Copolymers Ltd under the given trade designation. These coating compositions were used to coat films as described herein (using the Norcote ink as described above) and the results are given in Table 9.

**Table 9**

| Example | Age | Acetone | IPA | Rub |
|---|---|---|---|---|
| F | 13 days | 3 | 3 | 32 |
| 11 | 13 days | 2 | 3 | 34 |

These coatings were also were printed with two different inks and tested after the coat had aged for 2 weeks. The results are given in Table 10.

**Table 10**

| Example | Coat wt / g/m² | Ink | Pasteurisation | | Ice chest | |
|---|---|---|---|---|---|---|
| | | | Coin | Tape | Coin | Tape |
| F | 1.2 | Puritan | 3s | 10% | 1 s | 70% |
| 11 | 1.3 | Puritan | 0h | 0% | 0h | 0% |
| F | 1.1 | Hydrofilm | 1m | 30% | 0h | 0% |
| 11 | 1.3 | Hydrofilm | 1 h | 10% | 1 h | 0% |

Puritan denotes the solvent based, orange flexographic ink available commercially from BASF under the trade name Puritan PF.
Hydrofilm denotes the water based blue flexographic ink available commercially from Akzo Nobel under the trade name Hydrofilm 4000.
This data indicates that the coatings of the invention can be printed with a wide variety of inks and still show advantage of the prior art inks with a single cross-linker.

The following formulations were also tested with an epoxy cross-linker where: DWX 1210 is an undiluted clear difunctional bisphenol A epichlorohydrin liquid with an epoxy equivalent of 1.85 g and is available commercially from UCB Chemicals.

**Table 11 (DW 5861 resin & epoxy)**

| Ingredient | Weight / g | | | | |
|---|---|---|---|---|---|
| | G | 12 | 13 | 14 | 15 |
| DW 5861 hybrid | 90 | 85 | 85 | 85 | 80 |
| DWC 1210 (epoxy) | 10 | 5 | 10 | 10 | 5 |
| XE410 (isocyanate) | 0 | 10 | 5 | 0 | 10 |
| Ucecryl M2 (aziridine) | 0 | 0 | 0 | 5 | 5 |

**Table 12 (DW 5861 resin & epoxy)**

| (Tests performed after two week aging of coat). | | | | | |
|---|---|---|---|---|---|
| Example | Crosslinkers | Ice chest | | Pasteurisation | |
| | | Coin | Tape | Coin | Tape |
| G | 10% epoxy | 1,2,3 H | 60% | 4 M | 40% |
| 12 | 5% epoxy, 10% isocyanate | 0 H | 0 % | 0 H | 0 % |
| 13 | 10% epoxy, 5% isocyanate | 0 H | 0 % | 1 H | 15 % |
| 14 | 10% epoxy, 5% aziridine | 0 H | 0 % | 0 H | 1 % |
| 15 | 5% epoxy, 10% isocyanate, 5% aziridine | 0 H | 5 % | 0 H | 5 % |

The tests were repeated with another type of urethane acrylic polymer that available from commercially from Baxenden under the trade name Xenacryl 1554 (and similar to those described in WO 92/14768, for example Example 2).

**Table 13 (Xenacrvl 1554 resin & epoxy)**

| Ingredient | Weight / g | | | |
|---|---|---|---|---|
| | H | 16 | 17 | 18 |
| Xenacryl 1554 | 90 | 85 | 85 | 80 |
| DWC 1210 (epoxy) | 10 | 5 | 10 | 5 |
| XE410 (isocyanate) | 0 | 10 | 0 | 10 |
| Ucecryl M2 (aziridine) | 0 | 0 | 5 | 5 |

**Table 14 (Xenacryl 1554 resin & epoxy)**

| (Tests performed after two week aging of coat). | | | | | |
|---|---|---|---|---|---|
| Example | Crosslinkers | Pasteurisation | | Ice chest | |
| | | Coin | Tape | Coin | Tape |
| H | 10% epoxy | 4 M | 100% | 3 M | 40% |
| 16 | 5% epoxy, 10% isocyanate | 0 H | 0 % | 0 H | 5 % |
| 17 | 10% epoxy, 5% aziridine | 0, 0,1 H | 0 % | 0 H | 5 % |
| 18 | 5% epoxy, 10% isocyanate, 5% aziridine | 0 H | 0 % | 0 H | 0 % |

A further cross-linker was tested in combination with the isocyanate, that was the carbodiimide (CDI) available commercially from UCB Chemicals under the trade designation Ucarink XL29SE.

**Table 15 (DW 5861 resin & - CDI)**

| Ingredient | Weight / g | |
|---|---|---|
| | J | 19 |
| DW 5861 hybrid | 90 | 85 |
| XL 29 SE (CDI) | 0 | 6 |
| XE410 (isocyanate) | 10 | 10 |

**Table 16 (DW 5861 resin & CDI)**

| (Tests performed after two week aging of coat). | | | | | |
|---|---|---|---|---|---|
| Example | Crosslinkers | IPA resistance | Ice chest | Pasteurisation | |
| | | | | Coin | Tape |
| J | 10% CDI | 1 | 1,1,0 H | 1,1,1 H | 5% |
| 19 | 10% isocyanate, 6% CDI | 3 | 0,0,0 H | 0,0,0 H | 0% |

The results herein show that a variety of different coating resins whether physical blends, hybrids or copolymers of urethane and acrylic exhibit improved solvent (acetone) and/or alcohol (IPA) resistance when formulated with synergistic mixtures of two or more cross-linkers. The improvement is more then would be expected by the equivalent weight of a single cross-linker. Yet contrary to what would be expected by adding additional cross-linkers the coatings are printable and other properties such as water resistance are maintained. The improved resistance has been demonstrated with when the film was printed with a variety of inks and using a variety of different combinations of two or more cross-linkers.

## Claims

1. A coated sheet in which the coating composition comprising a urethane polymer component and an acrylic polymer component and further comprises a plurality of cross-linkers, wherein the sheet comprises a film of polyolefinic polymer.

2. A sheet as claimed in claim 1, in which at least one of the cross-linkers is selected from oxirane, carbodiimide, isocyanate, arizidine compounds and mixtures thereof.

3. A sheet as claimed in either preceding claim, in which at least one of the cross-linkers is selected from a carbodiimide and/or an arizidine compound.

4. A sheet as claimed in any preceding claim, which comprises two or three cross-linkers.

5. A sheet as claimed in any preceding claim, in which the coating composition is applied without a primer layer.

6. A sheet as claimed in any preceding claim which is receptive to inks (i.e. printable) and is water resistant, solvent resistant and alcohol resistant (as defined herein.)

7. A method of coating a sheet in the absence of a primer layer comprising applying directly to a primerless sheet in one or more steps a coating as described in any preceding claim.

8. A printable label and/or graphic arts display comprising a coated sheet as claimed in any of claims 1 to 6.

## Patentansprüche

1. Beschichteter Bogen, in dem die Beschichtungszusammensetzung eine Urethanpolymer-Komponente und eine Acrylpolymer-Komponente umfasst und weiter eine Vielzahl von Vernetzern umfasst, worin der Bogen eine Folie aus Polyolefinpolymer umfasst.

2. Bogen nach Anspruch 1, in dem mindestens einer der Vemetzer aus Oxiran-, Carbodiimid-, Isocyanat-, Arizidin-Verbindungen und Mischungen davon ausgewählt ist.

3. Bogen nach einem der vorstehenden Ansprüche, in dem mindestens einer der Vemetzer aus einer Carbodiimid- und/oder einer Arizidin-Verbindung ausgewählt ist.

4. Bogen nach einem der vorstehenden Ansprüche, der zwei oder drei Vemetzer umfasst.

5. Bogen nach einem der vorstehenden Ansprüche, in dem die Beschichtungszusammensetzung ohne eine Grundierungsschicht aufgetragen ist.

6. Bogen nach einem der vorstehenden Ansprüche, der für Farben aufnahmefähig (d.h. bedruckbar) ist und wasserbeständig, lösungsmittelbeständig und alkoholbeständig ist (wie hierin definiert).

7. Verfahren zur Beschichtung eines Bogens in Abwesenheit einer Grundierungsschicht, das auf einen Bogen ohne Grundierung in einem oder mehreren Schritten das direkte Auftragen einer Beschichtung umfasst, wie in einem der vorstehenden Ansprüche beschrieben.

8. Bedruckbares Etikett und/oder bedruckbare grafische Ansicht, die einen beschichteten Bogen nach einem der Ansprüche 1 bis 6 umfassen.

## Revendications

1. Feuille enduite dans laquelle la composition de l'enduit comprend un constituant de polymère d'uréthane et un constituant de polymère acrylique et comprend en outre une pluralité d'agents de réticulation, où la feuille comprend un film de polymère polyoléfinique.

2. Feuille selon la revendication 1, dans laquelle au moins l'un des agents de réticulation est choisi parmi les composés d'oxirane, de carbodiimide, d'isocyanate, d'arizidine et les mélanges de ces composés.

3. Feuille selon l'une quelconque des revendications précédentes, dans laquelle au moins l'un des agents de réticulation est choisi parmi un composé de carbodiimide et/ou d'arizidine.

4. Feuille selon l'une quelconque des revendications précédentes, qui comprend deux ou trois agents de réticulation.

5. Feuille selon l'une quelconque des revendications précédentes, dans laquelle la composition de l'enduit est appliquée sans couche d'apprêt.

6. Feuille selon l'une quelconque des revendications précédentes, qui a une affinité pour les encres (c'est-à-dire qui est imprimable) et qui est résistante à l'eau, résistante aux solvants et résistante aux alcools (comme cela est défini dans le présent document).

7. Procédé d'enduction d'une feuille en l'absence d'une couche d'apprêt comprenant l'application directe sur une feuille non apprêtée en une ou plusieurs étapes d'un enduit selon l'une quelconque des revendications précédentes.

8. Etiquette imprimable et/ou dispositif d'affichage imprimable pour arts graphiques comprenant une feuille enduite selon l'une quelconque des revendications 1 à 6.
